# EUROPEAN PATENT SPECIFICATION

(11) **EP 2 727 896 B1**
(45) Date of publication and mention of the grant of the patent: **10.04.2019**
(21) Application number: 12007473.7
(22) Date of filing: 02.11.2012
(51) Int. Cl.: C04B 35/573, C04B 35/80, F16D 65/12, F16D 69/02

(54) **PROCESS OF MANUFACTURING A BRAKE DISC ASSEMBLY**
VERFAHREN ZUR HERSTELLUNG EINER BREMSSCHEIBENANORDNUNG
PROCÉDÉ POUR FABRIQUER UN ENSEMBLE DE DISQUE DE FREIN

(43) Date of publication of application: 07.05.2014
(73) Proprietor: Brembo SGL Carbon Ceramic Brakes GmbH, 86405 Meitingen (DE)
(72) Inventor: Haubrich, Thorsten, 86152 Augsburg (DE); Scheppach, Jürgen, 89331 Burgau (DE); Reulein, Harald, 86750 Megesheim (DE); Wolfermann, Sascha, 86316 Friedberg (DE); Braun, Robert, 74223 Flein (DE); Reichardt, Fabian, 86152 Augsburg (DE)

(56) References cited:
- EP-A1- 1 643 151
- DE-A1- 10 116 659
- US-A- 6 119 827
- US-A1- 2003 180 538
- US-A1- 2008 035 437

## Description

### Field of the Invention

The invention relates to a process of manufacturing a brake disc assembly where the brake disc ring comprises a carbon-fibre reinforced carbon composite (C/C) or a carbon-fibre reinforced ceramic composite (C/ SiC). In particular, the invention relates to a process of producing brake discs for motor vehicles, in particular those where the friction discs are reinforced with short cut carbon fibres, especially short cut carbon fibre C/SiC core material (carbon fibre-reinforced materials whose matrix comprises carbon (C), silicon (Si), and/or silicon carbide (SiC)) and a ceramic friction layer comprising predominantly SiC phases.

### Background of the Invention

Disc brakes slow rotation of a rotating body by means of friction caused by pushing brake pads against a brake disc, typically using a set of callipers. Rotational energy is converted into heat through the friction occurring between brake pads and the brake disc. The heat that is generated in this process is taken up by the brake disc assembly, whereas most of the heat is dissipated by means of the brake disc, which can be an internally vented disc comprising ventilation channels. A brake disc assembly generally comprises a brake disc ring coupled to a bell.

The thermal stress applied to the brake assembly can lead to deformations, for example, of the brake disc in cases when thermal limitations of the brake disc material are reached. Brake discs have been traditionally made of cast iron, which typically has a thermal stability of up to about 700°C, limiting the maximum operating temperature. Recently, composites such as reinforced carbon or ceramic matrix composites have been used for brake discs, offering higher thermal stability. For example, Carbon fibre-reinforced silicon carbide materials (C/SiC) can provide a thermal stability of up to 1350°C, and brake discs made from C/SiC can exhibit a maximum operating temperature of up to 900°C in a non-inert atmosphere (e.g., ambient atmosphere).

Brake discs made from C/C or C/SiC can exhibit a settlement behaviour that can lead to changes in the geometry and/or operating characteristics of the brakes, for example, as used in a motor vehicle. Such changes can affect properties of the brake discs including the geometry and imbalance characteristics, which in turn can affect operational properties, such as noise, vibration, and harshness (NVH). Settling behaviour can be measured in different ways, including measuring the topography, thickness variations, waviness, axial run-out, imbalance, and eigenfrequency. In comparison to the properties of a new disc, for example, axial run-out or waviness of a used brake disc can increase by a factor of 2-3, which in turn may lead to a deterioration of the operational characteristics (e.g. increased vibration).

In general, a production process for carbon-ceramic (C/SiC) brake discs includes preparation of a fibre mixture, production of the brake disc ring, mounting of the brake disc bell to the brake disc ring and final machining of the assembled brake disc. The ceramic brake disc ring can be produced by compressing a preform with binding resin to create a green body. This is converted into the ceramic component in at least two successive high-temperature treatment processes, namely carbonisation and siliconisation. After carbonisation, the intermediate product can be referred to as carbonised body. After siliconisation, the intermediate product can be referred to as ceramic body. Generally, the ceramic body can be referred to as brake disc ring, before or after machining (e.g., before or after grinding of the ceramic body).

The production process for carbon-carbon (C/C) brake discs comprises, instead of the above-described carbonisation/siliconisation for C/SiC materials, a series of carbonisation steps or processes, in which the respective intermediate product (e.g., the green body or the carbonised body) is successively more and more densified using carbonisation with a suitable resin.

The base material used for brake disc production can be a mixture of short fibres impregnated with synthetic resin. The specific formulation of the base materials varies according to the component to be produced, for example a disc body, friction layers, or wear indicators. Specific fractions of carbon fibre sections, i.e. short fibres of defined length, are intermixed and blended with resin, the proportions depending on the formulation used.

First, hot pressing is used to produce a carbon fibre-reinforced plastic preform (CFRP), i.e. a CFRP green body. The applied moulding pressure densifies the base materials in a moulding die. The resin hardens under the effect of heat into a cross-linked plastic, thus acting as a binder. To manufacture a brake disc body, a plastic core is placed inside the die to act as a negative maid for producing the cooling vanes. The disc body obtained is provided with friction layers and wear indicators to produce a complete "green" brake disc ring. Compression moulding is followed by machining with standard machine tools.

The CFRP green body is coked at around 900°C in an air-free environment. Pyrolysis converts the plastic matrix of the green body into elemental carbon, which is why the process is referred to as carbonisation. The component yielded by carbonisation is a carbon fibre-reinforced carbon (C/C) green body. During thermal treatment, the plastic cores employed are burned without residues to produce cooling vanes. The resin used as a binder is converted into carbon. The carbonised "green" brake disc ring is then machined to close to the desired final contours.

Alternatively, the CFRP is carbonised first (see above) and subsequently combined, for example, with friction layers and wear indicators. The resulting body is then subjected to an additional (second) carbonisation.

To produce silicon carbide from carbon and silicon, a Liquid Silicon Infiltration (LSI) process can be used. In this process, the carbon matrix of the C/C green body is infiltrated with liquid silicon to convert it into silicon carbide. The process is carried out discontinuously at around 1700°C under high vacuum. The silicon melt is of low viscosity and easily penetrates the open-pore matrix of the C/C body. It reacts with the carbon of both the fibre coating and the converted binding resin to form the silicon carbide matrix. The carbon fibres remain unaffected by the siliconising process because their in situ coating prevents them from reacting with the silicon. Free silicon that has not reacted with carbon is the second matrix component.

After siliconisation, the ceramic (C/SiC) brake disc rings are machined with standard machine tools. The same applies to carbon (C/C) brake disc rings after the series of carbonisation steps. Also in this process the necessary holes for mounting the disc bell are drilled around the inner edge of the disc rings. As a final step, the brake disc rings are impregnated with an anti-oxidation agent to prolong service life.

At this stage, the brake disc ring and brake disc bell are assembled to form the brake disc. Slide bushes and screws are used for mounting the disc bell onto the ring under controlled torque and twist angle conditions.

Any side run out in the assembled brake disc is first eliminated by suitably machining, after which the brake disc is balanced by trimming excess material from its outer edge. To complete the production process, the carbon-ceramic brake disc then undergoes final inspection and testing.

US 2007/0237954 discloses a process for the impregnation of carbon fibre bundles that enables the carbon fibre bundles to be impregnated with a curable liquid resin without the impregnated fibre bundles sticking together. The fibre bundles are present in a mechanically generated fluidized bed during the impregnation and are held in the fluidized bed until the resin has been cured or at least dried. A resin-impregnated carbon fibre bundle, a shaped body and an intermediate body for silicisation are also provided.

US 2008/0176067 discloses a process for producing shaped bodies including carbon fibre-reinforced carbon in which the fibres are present in the form of bundles having a defined length, width and thickness. The defined configuration of the fibres in the bundles allows a targeted configuration of the reinforcing fibres in the carbon matrix and thus a structure of the reinforcement, which matches the stress of shaped bodies including carbon fibre-reinforced carbon, for example brake disks. A shaped body produced according to the invention is also provided.

### Summary of the Invention

According to the invention, there is provided a process of manufacturing a brake disc assembly comprising the steps of preparing a mixture of carbon fibres and a resin; subjecting the mixture to pressure treatment to form a green body; carbonizing the green body to form a carbonised body; siliconising the carbonized body to form a ceramic body; processing the ceramic body to obtain a brake disc ring; processing the brake disc ring and the bell to obtain a brake disc assembly; and subjecting the brake disc ring and/or the brake disc assembly to a relaxation treatment configured for reducing concentration of internal stresses in the brake disc ring before subjecting the brake disc ring and/or the brake disc assembly to final machining
wherein the relaxation treatment consists of subjecting the brake disc ring to a thermal treatment; and/or subjecting the brake disc ring or the brake disc assembly to a vibration treatment; and/or subjecting the brake disc ring or the brake disc to a torque treatment,
wherein the thermal treatment comprises the steps of increasing the temperature of the brake disc ring from an initial temperature to a peak temperature; maintaining the temperature of the brake disc ring at the peak temperature for a peak period; and decreasing the temperature of the brake disc ring to the initial temperature,
wherein the vibration treatment comprises the steps of establishing mechanical contact between an actuator and the brake disc ring or the brake disc assembly; controlling the actuator to actuate the brake disc ring or, respectively, the brake disc assembly at a frequency between 500 Hz and 1500 Hz using a load of 5 MPa to 30 MPa for an actuating period between 0.01 seconds and 60 minutes,
the torque treatment comprises the steps of establishing mechanical contact between an actuator assembly and the brake disc ring; applying a torque to the brake disc ring of between 1 kNm and 3 kNm about a rotation axis of the brake disc ring for a torque treatment period between 0.01 seconds and 60 minutes, wherein the rotation axis is oriented substantially perpendicular to a plane parallel to a friction surface of the brake disc ring and extends through a center thereof, and wherein the actuator assembly is configured to counter the torque applied to the brake disc ring.

In one aspect increasing the temperature of the brake disc ring can comprise increasing the temperature at a rate of 100°C to 600°C per hour to a peak temperature between 400°C and 1200°C. Decreasing the temperature of the brake disc ring can comprise decreasing the temperature at a rate of 100°C to 600°C per hour. The initial temperature is equal to room temperature, preferably about 25°C, and the peak period is between 5 minutes and 120 minutes.

In a preferred aspect, the temperature of the brake disc ring is increased at a rate of 400°C per hour to a peak temperature of 900°C, which is maintained for a period of 15 minutes. Then the temperature of the brake disc ring is decreased at a rate of 400°C per hour.

In another aspect increasing and/or decreasing the temperature comprises maintaining the temperature of the brake disc ring at a holding temperature between the initial temperature and the peak temperature for a holding period of between 10 minutes and 30 minutes.

In another aspect, the vibration treatment comprises the steps of establishing mechanical contact between an actuator and the brake disc ring or the brake disc assembly; and controlling the actuator to actuate the the brake disc ring or, respectively, the brake disc assembly at a frequency of 1000 Hz using a load of 10 MPa for an actuating period of 30 minutes.

In another aspect, the torque treatment comprises applying a torque repeatedly for a plurality of times, whereas each time the mechanical contact between the actuator assembly and the brake disc ring is released and re-established in an angularly shifted orientation of the brake disc ring and the actuator assembly with respect to the rotation axis and a previous orientation.

In a preferred aspect, the torque is 1.5 kNm and the torque treatment period is 10 minutes.

In another aspect, processing the ceramic body includes machining the ceramic body and/or trimming an outer edge of the ceramic body to balance the ceramic body.

In another aspect, a brake disc ring is disclosed, comprising a carbon fibre-reinforced brake disc ring having an axial run-out of less than 10 µm, preferably 5 µm and more preferably 3 µm, after the brake disc ring has been subjected to increasing the temperature of the brake disc ring from an initial temperature of about 25°C at a rate of 400°C per hour to a peak temperature of 900°C, maintaining the temperature of the brake disc ring for a period of 15 minutes, and decreasing the temperature of the brake disc ring at a rate of 400°C per hour.

Advantages of the inventive process and brake disc assembly include that the internal stresses within the ceramic material of the brake disc ring are reduced. This can lead to improved properties of the brake disc ring with respect to the settling behaviour. For example, the geometric properties of the brake disc ring can remain substantially unchanged during the use of the brake disc assembly so that changes to the geometric properties that occur during use of the brake disc assembly are minimised or eliminated.

### Brief Description of the Drawings

FIG. 1 shows steps of a known process for manufacturing carbon ceramic brake discs;
FIG. 2 is an isometric view of a brake disc assembly in accordance with the invention;
FIG. 3 shows a cross-section of a brake disc ring, with the rotation axis of the ring located in the plane of the cross-section;
FIG. 4 shows exemplary results of a topography measurement conducted on a brake disc before use;
FIG. 5 shows exemplary results of a topography measurement conducted on a brake disc after use;
FIG. 6 shows an overview of process steps for three different types of relaxation treatment in accordance with the invention;
FIG. 7 illustrates an exemplary configuration and apparatus for applying a vibration treatment to a brake disc assembly; and
FIG. 8 illustrates an exemplary configuration and apparatus for applying a torque treatment to a brake disc assembly.

### Detailed Description of the Invention

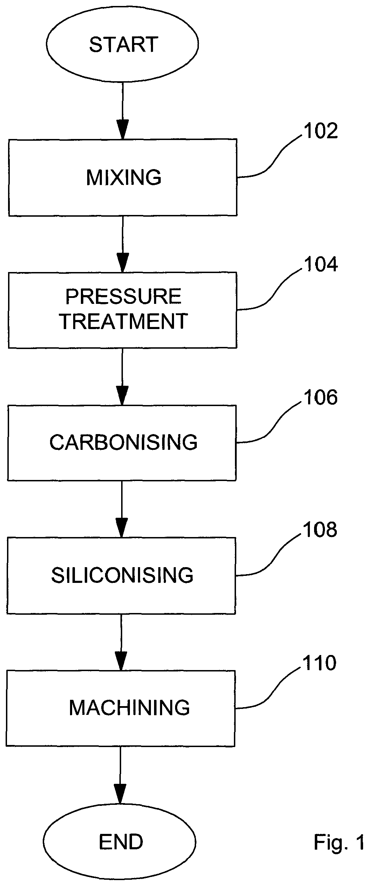

FIG. 1 shows steps of a known process for manufacturing carbon (ceramic) brake discs in which the inventive treatment of the brake disc can be used.

In detail, the process includes mixing 102 of carbon fibres and resin, hot pressing 104 of the mixture, carbonising 106, siliconising 108 and machining 110. In case of the manufacture of C/C brake disc rings, the step of siliconising 108 is replaced by a series of further carbonising steps.

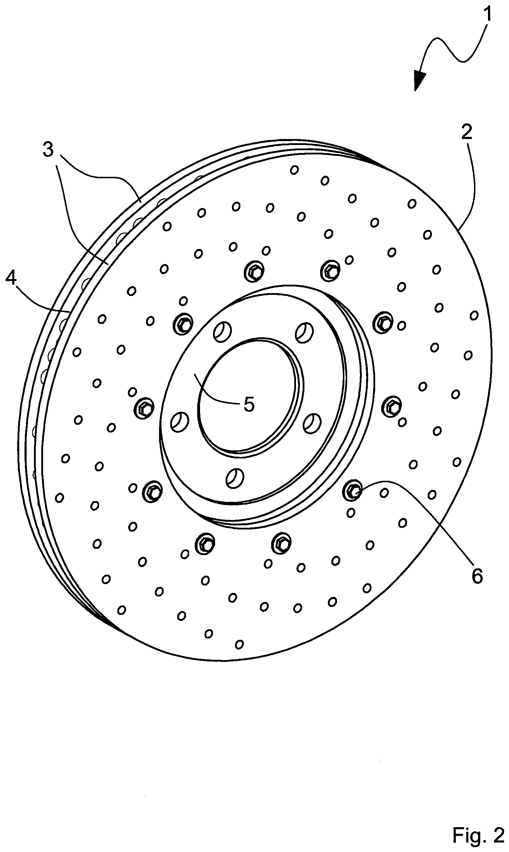

FIG. 2 is an isometric view of an exemplary brake disc assembly 1. Brake disc assembly 1 comprises a brake disc ring 2 and a bell 5, whereas the bell 5 is coupled to the brake disc ring 2 by screws and bushes 6. In this example, brake disc ring 2 comprises spaced-apart disc rings 3 fixedly coupled in a parallel configuration and having a ventilation section 4 defined there between.

It is understood that brake disc assembly 1 and/or brake disc ring 2 can have a different shape and configuration. For example, bell 5 can have a multitude of shapes, depending on the individual use. Further, connection means for attaching brake disc ring 2 to bell 5 can vary greatly. In some examples, screws and bushes 6 are used, in other examples, the connection between the brake disc ring and the bell can be designed as a floating system. Similarly, the ventilation section and perforation of the brake disc ring can be designed differently. In some examples, the rings do not have ventilation and/or perforation.

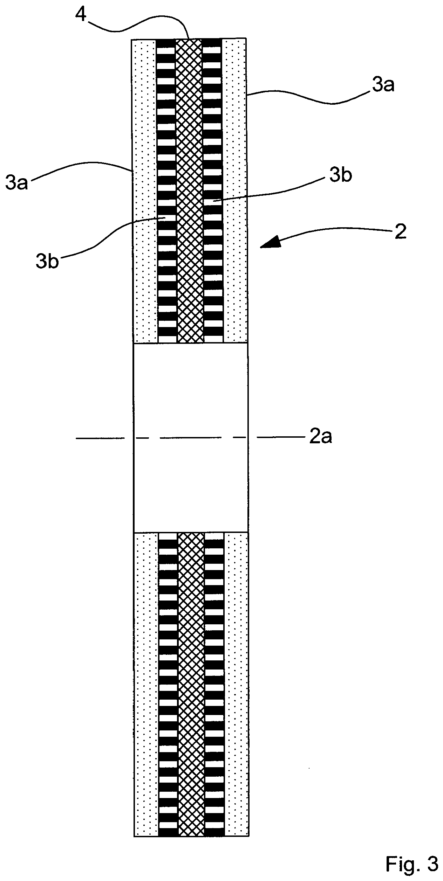

FIG. 3 shows a cross-section of a brake disc ring 2, where the rotation axis 2a of the ring is located in the plane of the cross-section (i.e. the direction of view is perpendicular to the rotation axis 2a of the brake disc ring 2). In this example, brake disc ring 2 comprises friction layers 3a, carrier bodies 3b, and a ventilation layer 4. FIG. 3, in particular, is not to scale but shows a schematic overview of the structural concept of an exemplary brake disc ring 2. For example, friction layers 3a are typically much thinner than shown in FIG. 3. However, for illustration purposes the different layers have been reduced or enlarged in size and are not to scale.

Thermal, mechanical, or thermo-mechanical strain on the brake discs in a motor vehicle can lead to a settling behaviour that can change the geometry and imbalance of the brake disc. It is understood that the settlement in C/C and C/SiC Material results from internal stresses within the brake disc ring (and/or the internal stresses in the material of which it is made, e.g., C/C or C/SiC) due to, for example, machining (e.g., grinding) and/or and thermal processing (e.g., carbonisation, siliconisation, etc.) during production. This can lead to negative effects in terms of comfort, for example noise vibration harshness.

The settling behaviour can be measured in a number of ways, including measurements of the topography, thickness variations, waviness, axial run-out, imbalance, and eigenfrequency.

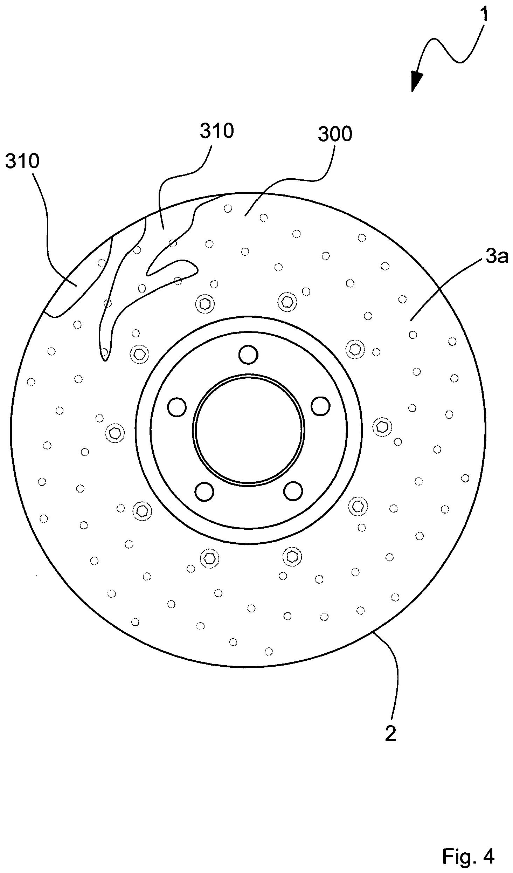

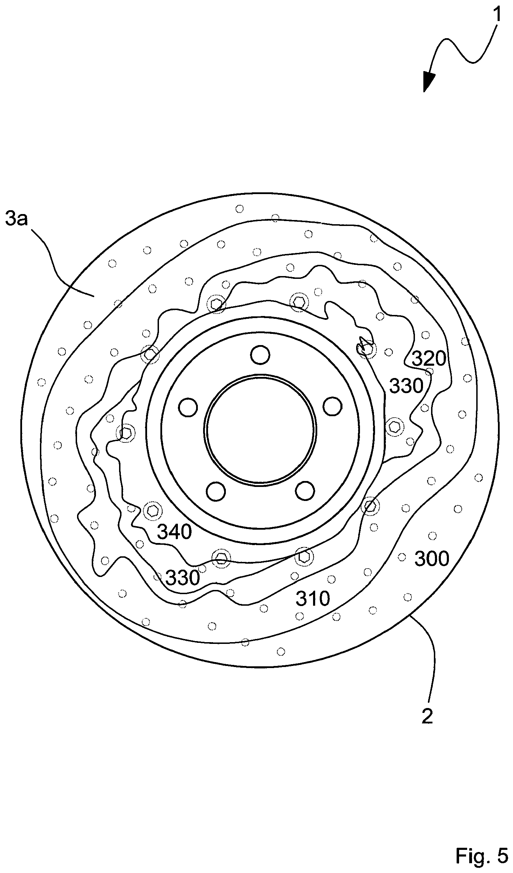

FIG. 4 shows exemplary results of a topography measurement conducted on a brake disc before use and FIG. 5 shows exemplary results of a topography measurement conducted on a brake disc after use. As can be seen from FIGs. 4 and 5, the geometry of the brake disc ring 2 has changed after use as compared to before use. It is noted, however, that each brake disc will exhibit its own individual topography profile, before, during, and after use. Similarly, each brake disc will have individual wear characteristics.

The geometry of a brake disc ring 2 can be measured, for example, by a topography measurement. Topography measurements can be conducted, for example, using optical technology (e.g., laser scanning) scanning the surface of an object. Measurements can also be conducted using mechanical systems, physically scanning (i.e. touching) the surface to be scanned. For the description of FIGs. 4 and 5, the particular measurement technique is not relevant, as long as the necessary resolution is achieved.

In FIG. 4, the topography of the friction surface 3a located on one side of a brake disc assembly 1 has been measured. Variations in the surface 3a of the brake disc ring 2 are shown as regions 300 and 310, whereas each region has a different associated value denoting the deviation from planarity. In the example shown in FIG. 4, region 300 represents the plane of surface 3a, having a deviation of 0. Regions 310 denote portions of the surface having a deviation of between +1 µm and +10 µm.

FIG. 5 shows exemplary results of a topography measurement conducted on brake disc ring 2 after use, after a series of test cycles has been executed, which simulate use in a motor vehicle over a specified period of time. The use can alternatively be simulated by a thermal treatment as described below. Variations in the surface 3a of brake disc ring 2 have been measured again and now surface 3a contains regions 300, 310, 320, 330, and 340. Each respective region denotes a particular deviation from the plane 300. For example, regions 320 and 330 respectively denote variations of +10 µm to +20 µm and +20 µm to +30 µm. In this way, the geometry of a brake disc ring can be measured and changes documented.

In the example shown in FIGs. 4 and 5, the axial run-out has increased after use. Table 1 shows individual results of the measurements. "TS" denotes the surface of the brake disc ring located on the side where the bell is located and "TGS" denotes the surface located on the opposite side with respect to the bell. Further, "DTV" means disc thickness variation and "W" means waviness. All values are given in millimetres (mm).

**Table 1**

| | Axial run-out TGS | Axial run-out TS | DTV | W n+2 TS | W n+2 TGS |
|---|---|---|---|---|---|
| New | 0.020 | 0.014 | 0.006 | 0.005 | 0.005 |
| After use simulation | 0.044 | 0.037 | 0.006 | 0.015 | 0.015 |

As can be seen from Table 1, the axial run-out has increased from 0.020 mm to 0.044 mm and from 0.014 mm to 0.037 mm, respectively. This means that the geometric properties of the discs have changed overtime, which may result in decreased comfort (e.g., decreased NVH performance).

It has been found that the settling behaviour depends on the internal stresses that the brake disc ring acquires during the manufacturing process. Internal stresses occur in the ceramic material of the brake disc ring and are a result of the mechanical and thermal processing of the material (e.g., grinding, carbonisation, siliconisation, etc.). Thus, reducing the internal stress of the brake disc ring during or after the manufacturing process leads to improved properties of the brake disc ring with respect to the settling behaviour.

It has further been found that three different relaxation treatments can be applied during or after manufacture in order to relieve internal stresses present in a brake disc ring. Any one of the relaxation treatments described below can be applied alone in isolation. Alternatively, individual treatments can be applied in combination with each other, for example, in sequence one after the other.

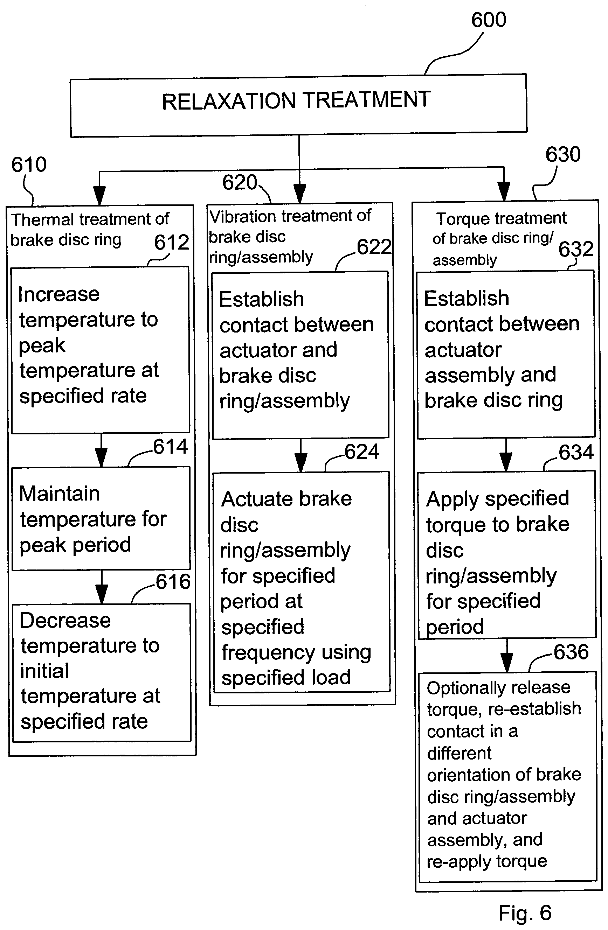

FIG. 6 shows an overview of process steps for three different types of relaxation treatment in accordance with the invention. The brake disc can be exposed to a thermal treatment 610 after the machining of the brake disc ring has been performed. The thermal treatment includes heating the brake disc ring in an inert atmosphere to a specific temperature, maintaining the temperature, and letting the brake disc ring cool down again.

Further, or alternatively, the brake disc can be exposed to a vibration treatment 620, in which the disc is actuated at a specified frequency (e.g., a frequency below the eigenfrequency of the disc) for a specified time.

Still further or alternatively, the brake disc can be exposed to a torque treatment 630, in which the brake disc undergoes a sequence of applications of a specific torque (e.g. 1.5 kNm), whereas the torque is applied at different angular orientations and for a specified period of time (e.g., each time for several seconds or minutes).

The above-mentioned treatments are each discussed in detail below and at least one preferred embodiment of the respective treatment is described.

Generally, the inventive treatment of the brake disc as described below can be performed after siliconisation (see FIG. 1, step 108) and before final machining (see FIG. 1, step 110) of the assembled brake disc. Typically, several additional process steps take place between these steps 108 and 110. Examples for additional process steps include, but are not limited to: machining of the brake disc ring 2, oxidation protection treatment, assembling of the bell 5 and the brake disc ring 2.

### Thermal Treatment

The treatment of the brake disc ring can comprise a thermal treatment 610. The thermal treatment can be applied to the brake disc after machining (e.g., grinding) of the brake disc ring, before final assembly of the brake disc assembly.

The temperature treatment includes increasing 612 the temperature of the brake disc at a specific rate up to a specific peak temperature in an inert atmosphere. In general, the rate in which the temperature is increased ranges between 100°C per hour and 600°C per hour. Subsequently, the peak temperature is maintained 614 for a specified peak period, and then, the temperature is decreased 616. The rate in which the temperature is decreased 616 is comprised in the same range and can be the same or different from the rate in which the temperature is increased. The peak temperature can be between 400°C and 1200°C. Some materials may allow for higher peak temperatures, in which case the maximum peak temperature is limited by the maximum temperature at which the structural integrity of the material is still maintained.

In embodiments in which the rate of temperature increase or decrease is relatively high (e.g. above 400°C per hour) it is possible to introduce a holding period during the increase/decrease of the temperature. During this holding period, the temperature is maintained at the same level in order to allow for the brake disc to have the same temperature through the entire body. A rapid increase or decrease of the temperature of the brake disc can lead to different parts of the brake disc reaching a specified temperature more quickly than other parts. In such cases, the temperature of the brake disc is not the same for all parts of the disc. In embodiments introducing a holding period, the holding period can be done during the increase or decrease of the temperature, or both. The rate of temperature increase/decrease is defined as the increase/decrease during the period in which the temperature is actually changed (i.e., an optional holding period is not included).

In one preferred embodiment, the initial temperature is about room temperature (e.g., 25 °C) and the temperature is increased 612 at a rate of 300°C per hour to a peak temperature of 900°C (without having a holding period in which the temperature is maintained at the same level). The peak temperature of 900°C is maintained 614 for 15 minutes and then the temperature is decreased 616, again at a rate of 400°C per hour until the initial temperature is re-established.

In general, higher peak temperatures are maintained for shorter periods of time than lower peak temperatures. For example, it is preferred to maintain a peak temperature of 500°C for about 60 minutes, whereas it is preferred to maintain a peak temperature of 1000°C for 10 minutes.

The increase and/or decrease of temperature can be linear or nonlinear. The above-described preferred embodiment is based on a linear temperature profile, in which the temperature is increased and decreased in a linear manner. That means, for example, that 15 minutes after starting an increase of the temperature at a rate of 400°C per hour, the temperature would be 100°C higher than the initial temperature. Further, the temperature would be 200°C higher than the initial temperature after 30 minutes, and so on. Other profiles can include periods during which the temperature is maintained (see concept of holding periods described above). Still other profiles can further or alternatively include exponential or logarithmic, step-wise, or any other changes to the temperature. Different profiles for increase and decrease can also be implemented in a single embodiment.

### Vibration Treatment

The vibration treatment 620 can be applied to the brake disc ring or the brake disc assembly, whereas the vibration treatment is applied to the brake disc ring.

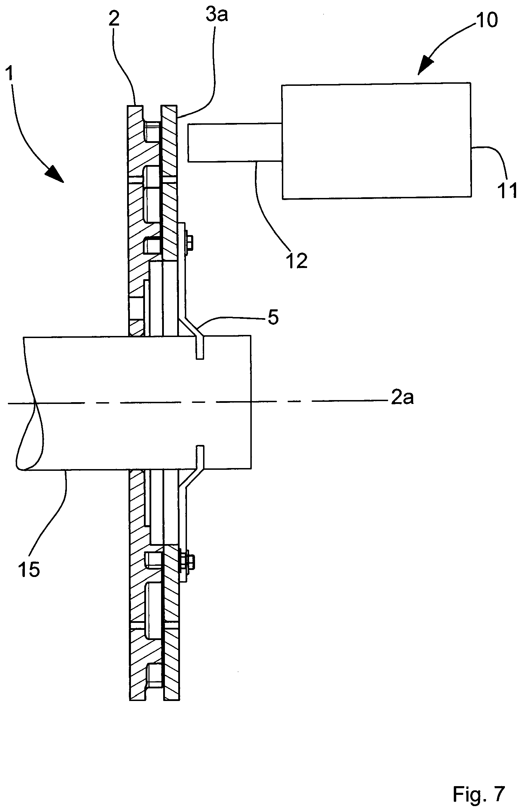

FIG. 7 illustrates an exemplary configuration and apparatus for applying a vibration treatment to a brake disc assembly. The brake disc assembly is mounted (or otherwise fixedly secured) to a holding element 15. The specific configuration of the holding element 15 is not of particular relevance, as long as the brake disc assembly 1 is securely fixed with respect to the apparatus 10. Holding element 15 can comprise, for example, a chucking device or a mounting shaft that can be fixedly coupled to the bell 5.

Apparatus 10 can comprise an actuator 11 that can generate mechanical vibrations in a manner know to the person skilled in the art. The actuator can be coupled to a transfer element that is in contact with the brake disc ring 2. Mechanical contact can be established (see step 622 in FIG. 6), for example, on the surface 3a of brake disc ring 2. In some configurations, mechanical contact is made directly between actuator 11 and brake disc ring 2. It is understood that the vibration treatment can be effected in a multitude of ways that can be similar or different from the configuration shown in FIG. 7.

Generally, the brake disc ring or brake disc assembly is mounted or otherwise fixedly secured with respect to an actuator and mechanical contact is established between the actuator and the brake disc. The actuator can be in mechanical contact with one of the friction surfaces of the brake disc, or any other part of the disc. The actuator applies (see step 624 in FiG. 6) vibrations having a frequency between 500 Hz and 1500 Hz to the brake disc, whereas it applies a load of between 5 MPa to 30 MPa for a period of 10 minutes to 60 minutes. The actuator can apply a range of frequencies over a period of time or apply a single constant frequency.

In one preferred embodiment, the actuator is brought (see step 622 in FIG. 6) into mechanical contact with one of the friction surfaces of the brake disc and vibrations with 1000 Hz and a load of 10 MPa for a period of 30 minutes are applied (see step 624 in FIG. 6) to the brake disc.

It is understood that the maximum load applied during vibration treatment is lower than a maximum load resulting in defects. For some brake discs, the maximum load is below 50 MPa, whereas at 50 MPa or more, surface defects can occur. Other brake discs can exhibit different resistance to defects.

In some embodiments, the frequency of the vibrations applied to the brake disc are selected to be near (e.g, below) the eigenfrequency of the disc. After the vibration treatment, the eigenfrequency of the disc can be different from that before the treatment.

In another embodiment, the vibration treatment is applied in a manner of sequentially applying different frequencies from an initial frequency of 500 Hz up to a peak frequency of 1500 Hz with the frequency increasing linearly over a period of 30 minutes. After the vibration treatment, the eigenfrequency of the brake disc ring is different (e.g., lower or higher) from the initial eigenfrequency, documenting the change effected with respect to the internal stresses in the brake disc ring.

### Torque Treatment

The torque treatment 630 can be applied to the brake disc ring or the brake disc assembly, whereas the torque treatment is applied to the brake disc ring.

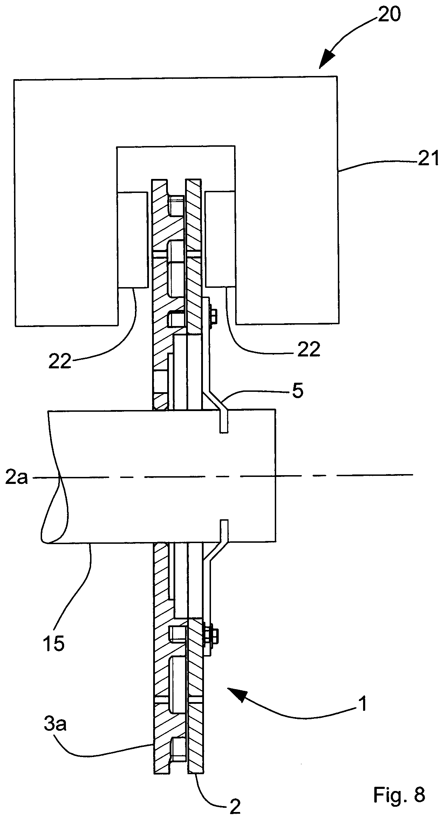

FIG. 8 illustrates an exemplary configuration and apparatus for applying a torque treatment to a brake disc assembly. The brake disc assembly 1 is mounted (or otherwise fixedly secured) to a holding element 15. The specific configuration of the holding element 15 is not of particular relevance, as long as the brake disc assembly 1 is securely fixed with respect to the apparatus 20. Holding element 15 can comprise, for example, a mounting shaft that can be fixedly coupled to the bell 5. For the torque treatment to be applied, a force has to be applied between apparatus 20 and the brake disc assembly.

Generally, the brake disc ring or brake disc assembly is mounted with respect to a torque actuator and mechanical contact is established (see step 632 in FIG. 6) between the actuator and the brake disc. In the embodiment shown in FIG 7, a calliper-type device 21 comprises an actuator configured to bring pads (or plates) 22 into mechanical contact with surface 3a of brake disc ring 2.

A torque is applied (see step 634 in FIG. 6) to the disc about axis 2a, which is substantially coincidental with the rotation axis of the disc in a use configuration. That means, that the torque is applied to the disc about an axis that is perpendicular to a plane parallel to the frictional surfaces of the disc and extending through the centre of the disc. The torque applied can be between 1 kNm and 3 kNm for a specified period of time. The torque can be pulsed (i.e. torque is applied for several seconds or fractions of a second). Alternatively, the torque can be applied for one or several minutes and up to 60 minutes.

In one preferred embodiment, the mechanical contact between the torque actuator and the disc is established (see step 632 in FIG. 6) by means of at least two pads (or plates) 22 in mechanical contact with surfaces 3a of brake disc ring 2. A torque of 1.5 kNm is applied, for example, to the mounting shaft (holding element 15, transferring the torque to the brake disc ring via the bell), for a period of 10 minutes, while the friction between pads 22 and brake disc ring (controlled, inter alia, by the pressure applied by actuator 21) counters the torque, for example by preventing relative motion (i.e. rotation) of the brake disc ring 2 with respect to the pads 22. Then, the torque and mechanical contact are released and re-established (see step 636 in FIG. 6) with the brake disc ring 2 being in an angular orientation different from the previous orientation. For example, the brake disc ring can be rotated by an angle of 36°. It is understood that smaller or larger angular steps can be executed (e.g., 45°, 72°, 90°, 180°, or using any other desired spacing). Subsequently, the torque is applied in a similar manner for a similar period and this series of steps is repeated until the initial orientation is reached at least once again. In the preferred embodiment, the torque treatment is applied 10 times for 10 minutes each and with a torque of 1.5 kNm.

The maximum applicable torque depends on the dimensions and other properties as well as the material of the disc and can be up to 3 kNm and more,

Alternatively, the brake disc or brake disc assembly is mounted with respect to a torque actuator and mechanical contact is established between the actuator and the brake disc. The mechanical contact can be established, for example, by means of one or more pins engaging corresponding openings present in the brake disc. The torque is applied to the disc about an axis that is substantially coincidental with the rotation axis of the disc in a use configuration. That means, that the torque is applied to the disc about an axis that is perpendicular to a plane parallel to the frictional surfaces of the disc and extending through the centre of the disc. The torque can be pulsed (i.e. torque is applied for several seconds or fractions of a second). Alternatively, the torque can be applied for one or several minutes and up to 60 minutes.

In another preferred embodiment, the mechanical contact between the torque actuator and the disc is established by means of a number of pins (e.g. 5 pins) engaged with corresponding openings in the brake disc. In this way, a torque of 1.0 kNm is applied for a period of up to 10 minutes. Then, mechanical contact is released and re-established in an angular orientation different from the previous orientation. For example, the pins are inserted into the respectively next corresponding opening in case of a symmetric distribution of the pins and openings. Subsequently, the torque is applied in a similar manner for a similar period and this is repeated until the initial orientation is reaches at least once again. In the preferred embodiment, the torque treatment is applied 5 times for 10 minutes each and with a torque of 1.0 kNm.

## Claims

1. A process of manufacturing a brake disc assembly comprising the steps of:
preparing a mixture of carbon fibres and a resin;
subjecting the mixture to pressure treatment to form a green body;
carbonizing the green body to form a carbonised body;
processing the carbonised body to obtain a brake disc ring;
processing the brake disc ring and a bell to obtain the brake disc assembly; and
subjecting the brake disc ring and/or the brake disc assembly to a relaxation treatment configured for reducing concentration of internal stresses in the brake disc ring before subjecting the brake disc ring and/or the brake disc assembly to final machining,
wherein the relaxation treatment consists of;
subjecting the brake disc ring to a thermal treatment; and/or
subjecting the brake disc ring or the brake disc assembly to a vibration treatment; and/or
subjecting the brake disc ring or the brake disc to a torque treatment,
wherein the thermal treatment comprises the steps of:
increasing the temperature of the brake disc ring from an initial temperature to a peak temperature;
maintaining the temperature of the brake disc ring at the peak temperature for a peak period; and
decreasing the temperature of the brake disc ring to the initial temperature,
wherein the vibration treatment comprises the steps of:
establishing mechanical contact between an actuator and the brake disc ring or the brake disc assembly; and
controlling the actuator to actuate the brake disc ring or, respectively, the brake disc assembly at a frequency between 500 Hz and 1500 Hz using a load of 5 MPa to 30 MPa for an actuating period between 0.01 seconds and 60 minutes,
wherein the torque treatment comprises the steps of:
establishing mechanical contact between an actuator assembly and the brake disc ring;
applying a torque to the brake disc ring of between 1 kNm and 3 kNm about a rotation axis of the brake disc ring for a torque treatment period between 0.01 seconds and 60 minutes, wherein the rotation axis is oriented substantially perpendicular to a plane parallel to a friction surface of the brake disc ring and extends through a center thereof, and wherein the actuator assembly is configured to counter the torque applied to the brake disc ring.

2. The process of claim 1, wherein increasing the temperature of the brake disc ring
comprises increasing the temperature at a rate of 100 °C to 600 °C per hour to a peak temperature between 400 °C and 1200 °C.

3. The process of claim 1 or 2, wherein decreasing the temperature of the brake disc ring comprises decreasing the temperature at a rate of 100 °C to 600 °C per hour.

4. The process of one of claims 1 to 3, wherein
the initial temperature is equal to room temperature, preferably wherein the initial temperature is equal to about 25 °C; and
the peak period is between 5 minutes and 120 minutes.

5. The process of one of claims 1 to 4, wherein
the temperature of the brake disc ring is increased at a rate of 400 °C per hour; the temperature of the brake disc ring is increased to a peak temperature of 900 °C;
the temperature of the brake disc ring is decreased at a rate of 400 °C per hour;
the initial temperature is about 25 °C; and
the peak period is 15 minutes.

6. The process of one of claims 1 to 5, wherein increasing and/or decreasing the temperature comprises:
maintaining the temperature of the brake disc ring at a holding temperature for a holding period; wherein
the holding temperature is comprised between the initial temperature and the peak temperature, optionally the holding period having a duration between 10 minutes and 30 minutes.

7. The process of claim 1, wherein the vibration treatment comprises the steps of:
establishing mechanical contact between an actuator and the brake disc ring or the brake disc assembly; and
controlling the actuator to actuate the the brake disc ring or, respectively, the brake disc assembly at a frequency of 1000 Hz using a load of 10 MPa for an actuating period of 30 minutes.

8. The process of claim 1, wherein the applying a torque is repeated for a plurality of times, whereas each time the mechanical contact between the actuator assembly and the brake disc ring is released and re-established in an angularly shifted orientation of the brake disc ring and the actuator assembly with respect to the rotation axis and a previous orientation.

9. The process of claim 8, wherein the torque is 1.5 kNm and the torque treatment period is 10 minutes.

10. The process of any of the preceding claims, wherein processing the carbonised body further includes:
siliconising the carbonized body to form a ceramic body; and
processing the ceramic body to obtain the brake disc ring, optionally wherein the step of processing the ceramic body includes machining the ceramic body and/or trimming an outer edge of the ceramic body to balance the ceramic body.

## Patentansprüche

1. Verfahren zur Herstellung einer Bremsscheibenbaugruppe, das folgende Schritte umfasst:
Herstellen eines Gemischs aus Kohlenstofffasern und einem Harz;
Vornehmen einer Druckbehandlung an dem Gemisch, um einen Grünkörper auszubilden;
Carbonisieren des Grünkörpers, um einen carbonisierten Körper auszubilden;
Verarbeiten des carbonisierten Körpers, um einen Bremsscheibenring zu erhalten;
Verarbeiten des Bremsscheibenrings und einer Glocke, um die Bremsscheibenbaugruppe zu erhalten; und
Vornehmen einer Entspannungsbehandlung an dem Bremsscheibenring und/oder an der Bremsscheibenbaugruppe, die vor dem Vornehmen einer Endbearbeitung des Bremsscheibenrings und/oder der Bremsscheibenbaugruppe für ein Verringern der Konzentration innerer Spannungen in dem Bremsscheibenring ausgelegt ist,
wobei die Entspannungsbehandlung aus Folgendem besteht:
Vornehmen einer Wärmebehandlung an dem Bremsscheibenring; und/oder Vornehmen einer Vibrationsbehandlung an dem Bremsscheibenring öder an der Bremsscheibenbaugruppe; und/oder
Vornehmen einer Drehmomentbehandlung an dem Bremsscheibenring oder an der Bremsscheibe,
wobei die Wärmebehandlung folgende Schritte umfasst:
Erhöhen der Temperatur des Bremsscheibenrings von einer Anfangstemperatur auf eine Spitzentemperatur;
Halten der Temperatur des Bremsscheibenrings bei der Spitzentemperatur während eines Spitzenzeitraums; und
Verringern der Temperatur des Bremsscheibenrings auf die Anfangstemperatur,
wobei die Vibrationsbehandlung folgende Schritte umfasst:
Herstellen eines mechanischen Kontakts zwischen einem Aktuator und dem Bremsscheibenring oder der Bremsscheibenbaugruppe; und
Steuern des Aktuators um auf den Bremsscheibenring beziehungsweise die Bremsscheibenbaugruppe mit einer Frequenz zwischen 500 Hz und 1,500 Hz unter Einsatz einer Last von 5 MPa bis 30 MPa während eines Einwirkungszeitraums zwischen 0,01 Sekunden und 60 Minuten einzuwirken,
wobei die Drehmomentbehandlung folgende Schritte umfasst:
Herstellen eines mechanischen Kontakts zwischen einer Aktuatoranordnung und dem Bremsscheibenring;
Anlegen eines Drehmoments zwischen 1 kNm und 3 kNm um eine Drehachse des Bremsscheibenrings an den Bremsscheibenring während eines Drehmomentbehandlungszeitraums zwischen 0,01 Sekunden und 60 Minuten, wobei die Drehachse im Wesentlichen senkrecht zu einer Ebene parallel zu einer Reibungsfläche des Bremsscheibenrings ausgerichtet ist und sich durch einen Mittelpunkt derselben erstreckt und wobei die Aktuatoranordnung dazu ausgestaltet ist, dem an den Bremsscheibenring angelegten Drehmoment entgegenzuwirken.

2. Verfahren nach Anspruch 1, wobei das Erhöhen der Temperatur des Bremsscheibenrings ein Erhöhen der Temperatur mit einer Rate von 100 °C bis 600 °C pro Stunde auf eine Spitzentemperatur zwischen 400 °C und 1.200 °C umfasst.

3. Verfahren nach Anspruch 1 oder 2, wobei das Verringern der Temperatur des Bremsscheibenrings ein Verringern der Temperatur mit einer Rate von 100 °C bis 600 °C pro Stunde umfasst.

4. Verfahren nach einem der Ansprüche 1 bis 3, wobei
die Anfangstemperatur gleich der Raumtemperatur ist, wobei die Anfangstemperatur vorzugsweise gleich etwa 25 °C ist; und
der Spitzenzeitraum zwischen 5 Minuten und 120 Minuten beträgt.

5. Verfahren nach einem der Ansprüche 1 bis 4, wobei
die Temperatur des Bremsscheibenrings mit einer Rate von 400 °C pro Stunde erhöht wird;
die Temperatur des Bremsscheibenrings auf eine Spitzentemperatur von 900 °C erhöht wird;
die Temperatur des Bremsscheibenrings mit einem Rate von 400 °C pro Stunde verringert wird;
die Anfangstemperatur etwa 25 °C beträgt; und
der Spitzenzeitraum 15 Minuten beträgt.

6. Verfahren nach einem der Ansprüche 1 bis 5, wobei das Erhöhen und/oder Verringern der Temperatur Folgendes umfasst:
Halten der Temperatur des Bremsscheibenrings bei einer Haltetemperatur während eines Haltezeitraums; wobei
die Haltetemperatur zwischen der Anfangstemperatur und der Spitzentemperatur liegt, wobei der Haltezeitraum optional eine Dauer zwischen 10 Minuten und 30 Minuten aufweist.

7. Verfahren nach Anspruch 1, wobei die Vibrationsbehandlung folgende Schritte umfasst:
Herstellen eines mechanischen Kontakts zwischen einem Aktuator und dem Bremsscheibenring oder der Bremsscheibenbaugruppe; und
Steuern des Aktuators um auf den Bremsscheibenring beziehungweise die Bremsscheibenbaugruppe mit einer Frequenz von 1.000 Hz unter Einsatz einer Last von 10 MPa während eines Einwirkungszeitraums von 30 Minuten einzuwirken.

8. Verfahren nach Anspruch 1, wobei das Anlegen eines Drehmoments mehrere Male wiederholt wird, wohingegen jedes Mal der mechanische Kontakt zwischen der Aktuatoranordnung und dem Bremsscheibenring aufgehoben und in einer winkelbezogen verschobenen Ausrichtung des Bremsscheibenrings und der Aktuatoranordnung mit Bezug auf die Drehachse und eine vorherige Ausrichtung wiederhergestellt wird.

9. Verfahren nach Anspruch 8, wobei das Drehmoment 1,5 kNm beträgt und der Drehmomentbehandlungszeitraum 10 Minuten beträgt.

10. Verfahren nach einem der vorangehenden Ansprüche, wobei das Verarbeiten des carbonisierten Körpers ferner Folgendes umfasst:
Silizieren des carbonisierten Körpers, um einen Keramikkörper auszubilden; und
Verarbeiten des Keramikkörpers, um den Bremsscheibenring zu erhalten, wobei der Schritt des Verarbeitens des Keramikkörpers optional ein maschinelles Bearbeiten des Keramikkörpers und/oder Beschneiden einer Außenkante des Keramikkörpers zum Vergleichmäßigen des Keramikkörpers umfasst.

## Revendications

1. Procédé de fabrication d'un ensemble disque de frein comprenant les étapes consistant à:
préparer un mélange de fibres de carbone et d'une résine ;
soumettre le mélange à un traitement thermique pour former un corps vert ;
carboniser le corps vert pour former un corps carbonisé ;
traiter le corps carbonisé pour obtenir un cylindre de disque de frein ;
traiter le cylindre de disque de frein et une emboiture pour obtenir un ensemble disque de frein; et
soumettre le cylindre de disque de frein et/ou l'ensemble disque de frein à un traitement de relaxation configuré pour réduire la concentration des contraintes internes dans le cylindre de disque de frein avant de soumettre le cylindre de disque de frein et/ou l'ensemble disque de frein à un usinage final,
dans lequel le traitement de relaxation comprend les étapes consistant à :
soumettre le cylindre de disque de frein à un traitement thermique ; et/ou soumettre le cylindre de disque de frein ou l'ensemble disque de frein à un traitement de vibration ; et/ou
soumettre le cylindre de disque de frein ou le disque de frein à un traitement de torsion,
dans lequel le traitement thermique comprend les étapes consistant à :
augmenter la température du cylindre de disque de frein depuis une température initiale jusqu'à une température maximale ;
maintenir la température du cylindre de disque de frein à la température maximale pendant une période de pointe ; et
diminuer la température du cylindre de disque de frein à la température initiale,
dans lequel le traitement de vibration comprend les étapes consistant à :
établir un contact mécanique entre un actionneur et le cylindre de disque de frein ou l'ensemble disque de frein ; et
contrôler l'actionneur pour actionner le cylindre de disque de frein ou, respectivement, l'ensemble disque de frein à une fréquence comprise entre 500 Hz et 1 500 Hz à l'aide d'une charge de 5 MPa à 30 MPa pendant une période d'actionnement comprise entre 0,01 seconde et 60 minutes,
dans lequel le traitement de torsion comprend les étapes consistant à :
établir un contact mécanique entre un ensemble actionneur et le cylindre de disque de frein ou l'ensemble disque de frein ;
appliquer une torsion au cylindre de disque de frein comprise entre 1 kNm et 3 kNm autour d'un axe de rotation du cylindre de disque de frein pendant une période de traitement de torsion comprise entre 0,01 seconde et 60 minutes,
dans lequel l'axe de rotation est orienté sensiblement perpendiculairement à un plan parallèle à une surface de frottement du cylindre de disque de frein et s'étend jusqu'à son centre, et dans lequel l'ensemble actionneur est configuré pour contrer la torsion appliquée au cylindre de disque de frein.

2. Procédé selon la revendication 1, dans lequel l'augmentation de la température du cylindre de disque de frein comprend l'augmentation de la température à une vitesse de 100 °C à 600 °C par heure jusqu'à une température maximale comprise entre 400 °C et 1 200 °C.

3. Procédé selon la revendication 1 ou 2, dans lequel la diminution de la température du cylindre de disque de frein comprend la diminution de la température à une vitesse de 100 °C à 600 °C par heure.

4. Procédé selon l'une des revendication 1 à 3, dans lequel
la température initiale est égale à la température ambiante, la température initiale étant de préférence égale à environ 25 °C ; et
la période de pointe est comprise entre 5 minutes et 120 minutes.

5. Procédé selon l'une des revendication 1 à 4, dans lequel
la température du cylindre de disque de frein est augmentée à une vitesse de 400 °C par heure ;
la température du cylindre de disque de frein est augmentée à une température maximale de 900 °C ;
la température du cylindre de disque de frein est diminuée à une vitesse de 400 °C par heure ;
la température initiale est d'environ 25 °C ; et
la période de pointe est de 15 minutes.

6. Procédé selon l'une des revendication 1 à 5, dans lequel l'augmentation et/ou la diminution de la température comprend :
le maintien de la température du cylindre de disque de frein à une température de maintien pendant une période de maintien ; où
la température de maintien est comprise entre la température initiale et la température maximale, la période de maintien ayant facultativement une durée comprise entre 10 minutes et 30 minutes.

7. Procédé selon la revendication 1, dans lequel le traitement de vibration comprend les étapes consistant à :
établir un contact mécanique entre un actionneur et le cylindre de disque de frein ou l'ensemble disque de frein ; et
contrôler l'actionneur pour actionner le cylindre de disque de frein ou, respectivement, l'ensemble disque de frein à une fréquence de 1 000 Hz à l'aide d'une charge de 10 MPa pendant une période d'actionnement de 30 minutes.

8. Procédé selon la revendication 1, dans lequel l'application d'une torsion est répétée plusieurs fois, tandis qu'à chaque fois que le contact mécanique entre l'ensemble actionneur et le cylindre de disque de frein est relâché et rétabli selon une orientation angulaire décalée du cylindre de disque de frein et de l'ensemble actionneur par rapport à l'axe de rotation et une orientation précédente.

9. Procédé selon la revendication 8, dans lequel la torsion est de 1,5 kNm et la période de traitement de torsion est de 10 minutes.

10. Procédé selon l'une quelconque des revendications précédentes, dans lequel le traitement du corps carbonisé comprend en outre les étapes consistant à :
siliconer le corps carbonisé pour former un corps céramique ; et
traiter le corps céramique pour obtenir le cylindre de disque de frein, l'étape consistant à traiter le corps céramique comprend facultativement l'usinage du corps céramique et/ou l'ébavurage d'un bord extérieur du corps céramique pour équilibrer le corps céramique.
